# EUROPEAN PATENT APPLICATION

(11) **EP 3 751 241 A1**
(43) Date of publication of application: **16.12.2020**
(21) Application number: 19179741.4
(22) Date of filing: 12.06.2019
(51) Int. Cl.: G01F 11/08, G01F 15/16

(54) **FLUID DOSING SYSTEM**

(71) Applicant: CSEM Centre Suisse d'Electronique et de Microtechnique SA, 2002 Neuchâtel (CH)
(72) Inventor: SCHMID, Noa, 6010 Kriens (CH); GRAF, Siegfried, 6010 Kriens (CH); HALVORSEN, Zahra Alsadat, 8002 Zürich (CH)
(74) Representative: e-Patent SA

(57) **Abstract**

Fluid dosing system (1) comprising:
- a dosing chamber (3) divided in a fluid-tight manner by means of a displaceable membrane (5) into:
a) a dosing compartment (3a); and
b) a working fluid compartment (3b) filled with a working fluid having a bulk modulus of at least 1GPa;

- a first fluid port (3c) in fluidic communication with said dosing compartment (3a);
- a second fluid port (3d) in fluidic communication with said working fluid compartment (3b);
- an expansion reservoir (9) in fluidic communication with said fluid second port (3d) and filled with said working fluid;
- a bidirectional pump (7) in fluidic communication with said second port (3d) and said expansion reservoir (9) so as to be able to pump said working fluid bidirectionally between said working fluid compartment (3b) and said expansion reservoir (9);
- a flow sensor (13) arranged to measure flow of said working fluid based on displacement of at least part of said expansion reservoir (9).

## Description

### Technical Field

The present invention relates to the technical field of pumps. More particularly, it relates to a fluid metering system which is capable of substantially pulse-free operation.

### State of the art

Syringe pumps are well known in the art, and are little more than a conventional syringe in which the piston is actuated by a motor via a rack- and-pinion, gearwheel or screw arrangement so as to dispense and/or aspirate a sample, typically a liquid sample. Such actuation results in the flow of the sample being pulsatory, and requires a significantly bulky apparatus. Furthermore, the sliding fit of the piston results in stick-slip during actuation, leading to inaccuracy, and is subject to wear. In respect of this latter point, due to the sliding seal formed between the piston and the cylinder of the syringe, particles can be sloughed off the piston head, contaminating the liquid. Also, contaminants on the dry sidewalls of the syringe can be introduced into the liquid if the piston head rides over them, which is a major issue in the case in which the sterility of the liquid to be dispensed must be maintained.

Syringe pumps are sometimes combined with flow volume and/or flow rate sensors, which have to be placed in contact with the fluid being dosed. This presents a further contamination risk, particularly in the case of biological samples which need to be kept sterile, requiring the sensor remain scrupulously clean and sterile, which is difficult to achieve.

US 6419462 describes various embodiments of positive displacement liquid delivery apparatuses, which avoid such a sliding seal in contact with the liquid to be dispensed. Figure 1 of this document will be briefly described in the following. This apparatus comprises a housing defining a cavity which is divided into two compartments by a flexible membrane. The first compartment is filled with the liquid to be metered and delivered, and is in fluidic communication with a reservoir thereof via a corresponding valve (the input valve). It is likewise in fluidic communication with an output port by means of a second (output) valve. The second compartment is filled with a substantially incompressible working fluid such as water, silicone oil or similar, and is in communication with a working fluid reservoir via a constant flow pump. A bypass valve enables the working fluid compartment to be drained to the working fluid reservoir.

To operate the apparatus, a quantity of liquid to be dispensed is introduced into the first compartment by closing the output valve, opening the input valve, and forcing the liquid to be dispensed to enter into the first compartment by gas pressure. At the same time, the bypass valve is opened so as to allow the working fluid displaced by the movement of the flexible membrane to drain into the working fluid reservoir.

Subsequently, the input valve is closed, and the output valve is opened. The bypass valve is likewise closed, and the constant flow pump is operated. The volume of fluid delivered corresponds to the volume of working fluid pumped, which can be determined by e.g. counting the number of turns or part turns of the pump actuator.

However, such an arrangement is complicated and requires three valves for its operation. Furthermore, since it relies on predetermination of the volume of working fluid pumped in function of the operation of the pump, errors can occur due to non-correlation between the nominal flow rate of the pump and the actual flow rate.

An aim of the present invention is hence to at least partially overcome the above-mentioned disadvantages of the prior art.

### Disclosure of the invention

The invention hence relates to a fluid dosing system as described in claim 1. This fluid dosing system comprises:
- a dosing chamber divided in a fluid-tight manner by a displaceable membrane into:
   a) a dosing compartment, which may contain a liquid to be dispensed or a gas such as air intended to aspirate and dispense a liquid as generally known in pipetting; and
   b) a working fluid compartment filled with a working fluid having a bulk modulus of at least 1GPa, which is hence substantially incompressible. This working fluid can be e.g. water, hydraulic fluid, mineral oil, silicone oil or similar.
- a first fluid port in fluidic communication with said dosing compartment, which hence permits gas or liquid to enter and leave the dosing compartment;
- a second fluid port in fluidic communication with said working fluid compartment;
- an expansion reservoir in indirect fluidic communication with said second port and filled with said working fluid;
- a bidirectional pump in fluidic communication with said second port and said expansion reservoir so as to be able to pump said working fluid bidirectionally between said working fluid compartment and said expansion reservoir. In other words, the pump is interposed between the second port and the expansion reservoir;
- a flow sensor arranged to measure flow of said working fluid based on displacement of said expansion reservoir, and thereby to determine the volume which has flowed and/or its flow rate.

This displacement can be measured directly, e.g. by measuring the displacement of a piston or the end face of a bellows, or may be indirect, e.g. by measuring displacement of air caused by expansion and contraction of the expansion reservoir in an air-filled enclosure.

As a result, accurate measurement of the volume and/or flow rate of fluid aspirated or dosed is possible, without placing a sensor in contact with the fluid itself, and without relying on the calibration of a constant volume pump. Hence other types of pumps such as viscous flow pumps can be used, which do not have a precise relationship between their mechanical actuation and the volume pumped. Since the fluid pumped is substantially incompressible, precise measurement can be obtained (which is not possible with e.g. pneumatic actuation without having a sensor in contact with the fluid being pumped), while avoiding the inaccuracies associated with pump-related stick-slip, gear backlash or similar of a syringe pump. Furthermore, the system can be made extremely compact, and is hence suitable for microfluidic applications.

In an embodiment, the expansion reservoir comprises a cylinder in which a piston is slidingly mounted, said flow sensor being arranged to measure displacement of said piston.

In a different embodiment, said expansion reservoir comprises an expandable bellows.

Advantageously, said expansion reservoir comprises an expandable enclosure filled with said working fluid and situated in a gas filled chamber, said gas filled chamber having a gas port situated therein, and said flow sensor being arranged to measure the flow volume and/or the flow rate of said gas through said gas port. The expansion and contraction of the expandable enclosure displaces air through the gas port, this flow of air corresponding to the flow of fluid being aspirated or dispensed from the dosing compartment. Such an arrangement can be made extremely compact, and comprises no sliding seals which may be subject to wear. The expandable enclosure may, for instance, be a balloon, an expandable bellows, or a compartment in the gas filled chamber delimited by a displaceable membrane.

In respect of the pump, this can advantageously be a gear pump or a viscous drag pump. In the latter case, a controllable valve may be situated in the fluid pathway between the working fluid compartment and the expansion reservoir, either between the working fluid compartment and the pump, or between the pump and the expansion reservoir. This valve prevents movement of the working fluid when the viscous drag pump is not being operated. Preferably, this valve is arranged to be controlled by a controller on the basis of an output of said flow sensor.

Advantageously, the pump is arranged to be controlled by a controller on the basis of an output of said flow sensor. Such feedback control permits very precise dosing of predetermined quantities of fluid.

A fluid dosing system as described above can, for instance, be integrated into a pipetting system, a flow cytometry system, a microfluidic chip or similar.

### Brief description of the drawings

Further details of the invention will appear more clearly upon reading the description below, in connection with the following figures which illustrate:
- Figure 1: a schematic view of a first embodiment of the invention;
- Figure 2: a schematic view of a second embodiment of the invention;
- Figure 3: a schematic view of a third embodiment of the invention;
- Figure 4: a schematic view of a fourth embodiment of the invention; and
- Figure 5: a schematic view of a pipetting system incorporating a fluid dosing system according to the invention.

### Embodiments of the invention

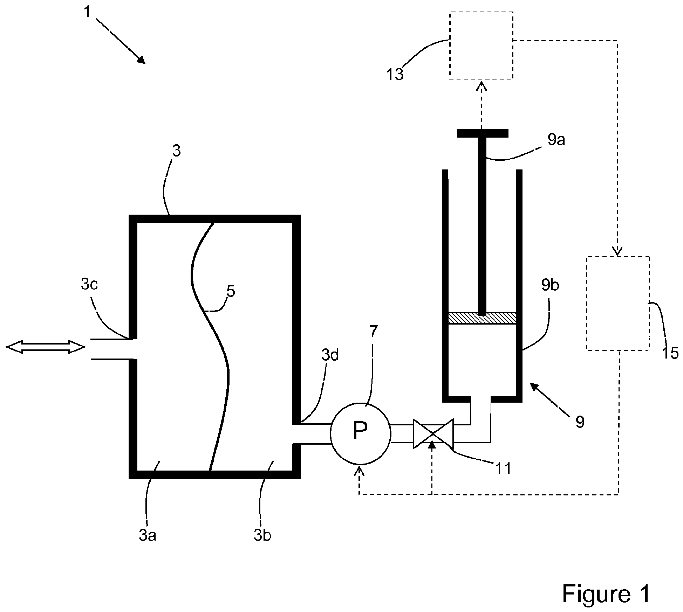

Figure 1 illustrates a first embodiment of a fluid dosing system 1 according to the invention. In the figures, dashed lines illustrate functional relationships transmitting information or commands, for instance by electronics, optics, mechanics or other means, as appropriate in each case.

This system comprises a hollow dosing chamber 3 divided into a dosing compartment 3a and a working fluid compartment 3b by means of a movable membrane 5.

Membrane 5 is sealingly fixed to the walls of the chamber 3, and may be for instance a simple membrane made of an elastic material such as a polymer or an elastomer, may be a substantially inelastic material arranged with slack such that the mid-part membrane can displace, may be metallic or polymer bellows-type arrangement (similar to that used in a traditional aneroid capsule) or any other convenient arrangement. Suitable materials are metals, PTFE, polymers, elastomers, and so on, which are impermeable to the fluids with which it is in contact.

Dosing compartment 3a can be filled either with the fluid to be dosed, or a gas such as air, nitrogen or argon, and has a first fluid port 3c arranged in a sidewall thereof, in order to allow said fluid to enter and leave the dosing compartment 3a. Depending on the manner in which the system 1 is being used, a pipette tip and/or a suitable conduit may be directly or indirectly connected to the first fluid port 3c in fluidic communication therewith. In the case in which dosing compartment 3a is filled with a gas, a liquid sample can be aspirated into and dispensed from the pipette tip and/or conduit as is generally known, and hence need not be described in detail.

Working fluid compartment 3b is filled with a working fluid such as water, hydraulic fluid, mineral oil, silicone oil or similar, substantially incompressible fluid, defined in context of the present invention as exhibiting a bulk modulus of greater than 1 GPa, preferably at least 1.5 GPa, further preferably at least 2 GPa.

Working fluid compartment 3b is provided with a second fluid port 3d in a sidewall thereof. In order to cause the working fluid to enter and leave the working fluid compartment 3b, a bidirectional pump 7 is provided in fluidic communication therewith, and is arranged to pump said working fluid between said working fluid compartment 3b and an expansion reservoir 9, to which end it is likewise in fluidic communication therewith, and which will be described in further detail below.

Pump 7 is advantageously of the viscous drag type, such as described in EP2208891. Such a pump is not only bidirectional, but it is entirely pulsation-free. However, when such a pump is stopped, it exhibits internal leakage, in which case a controllable valve 11 is provided in the fluid pathway between the working fluid compartment 3b and the expansion reservoir 9. In the illustrated embodiment, this is situated between the pump 7 and the expansion reservoir 9, however this can alternatively be situated between the pump 7 and the working fluid compartment 3b. It should also be noted that the pump 7 can be integrated into the sidewall of the working fluid compartment 3b, and/or the valve 7 may be integrated with the pump 7. In the case of such a pump, the pressure which can be produced is proportional to the viscosity of the working fluid, which is typically higher than that of water (e.g. hydraulic fluid, silicone oil or similar).

Other types of bidirectional pump are also possible, such as a gear pump which is substantially (but not entirely) pulsation free. Since such gear pumps typically do not exhibit significant internal leakage, the valve 7 may be optional in such cases. Due to the inertia of the working fluid and the membrane 5, the small residual pulsation is essentially filtered out and is reduced to insignificance, and hence such pumps are suitable for use with the invention.

Hence, by pumping working fluid into or out of the working fluid compartment 3b, its volume can be changed. This causes at least part of the membrane 5 to displace, which modifies the volume of the dosing compartment 3a to the same extent, due to the incompressibility of the working fluid.

As a result, by measuring the change in volume of the expansion reservoir 9, the volume and/or flow rate of fluid entering into or leaving the dosing chamber 3a can be precisely measured, without interacting directly therewith, and without a sliding seal being present in contact with the fluid in the dosing chamber 3a.

In the embodiment of figure 1, the expansion reservoir 9 is a syringe-type arrangement, with a piston 9a slidably arranged in a cylinder 9b as is generally known. The sliding seal between the piston 9a and the cylinder 9b is arranged to present as little resistance as possible, such that the volume of working fluid in the expansion chamber 9 can vary without overworking the pump 7.

The displacement of the piston 9a can be determined by a measuring device 13, which may for instance comprise a mechanical measurement system comprising for instance a toothed rack attached to the piston 9a and a pinion or gear wheel meshing therewith such that its rotation can be measured e.g. by means of a rotary encoder. Alternatively, nonmechanical measurement can be carried out, e.g. by means of ultrasonic or laser measurement of the position of the piston 9a, optical reading of a Vernier scale, a capacitive or inductive sensing system, or similar, as is generally known.

This measuring device 13 is in operational connection with a controller 15, which determines the volume of working fluid pumped, and / or its flow rate. Controller 15 may also control the pump 7, e.g. by a Proportional-Integral-Differential (PID) controller, simple feedback control, or similar, in order to pump a predetermined quantity of working fluid and thereby to aspirate or dispense a predetermined quantity of a sample. At the same time, controller 15 may command valve 11 (if present) to open and close as appropriate.

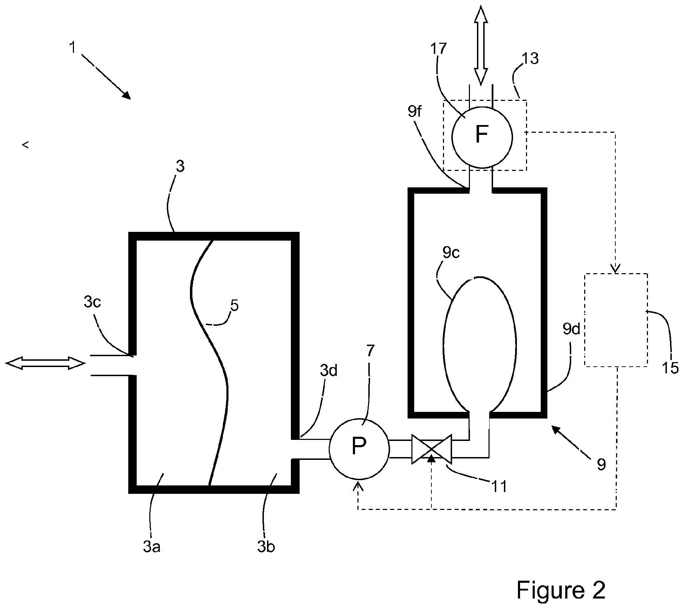

The embodiment of figure 2 differs from that of figure 1 in that the expansion reservoir 9 comprises a flexible balloon 9c defining an expandable enclosure situated inside a substantially rigid chamber 9d. This latter is filled with a gas such as air, and comprises an outlet port 9f in fluidic communication with a flow meter 17 which forms part of measuring device 13 and is arranged to measure the volumetric flow and / or flow rate of said gas into and out of the rigid chamber 9d. Any convenient type of flow meter 17 can be used, such as a differential pressure flow meter comprising a flow restriction, an anemometer-type flow meter, a Coriolis flow meter, or similar. The other side of the flow meter can vent to atmosphere or to a yet further reservoir (not illustrated). In other words, displacement of the surface of the balloon 9c hence causes the volume of the air-filled portion of the rigid chamber 9d to change, displacing air through the outlet port 9f, this displaced air having substantially the same volume as the fluid aspirated / dispensed. The flow meter 17 thereby indirectly measures this volume based on displacement of the surface of the balloon 9c during aspiration / dispensing as working fluid enters or leaves it.

As before, measuring device 13 is in operational connection with a controller 15.

Alternatively, the expansion reservoir 9 may comprise an expandable bellows (not illustrated) or other expandable enclosure instead of a balloon 9c, the system functioning otherwise in the same manner.

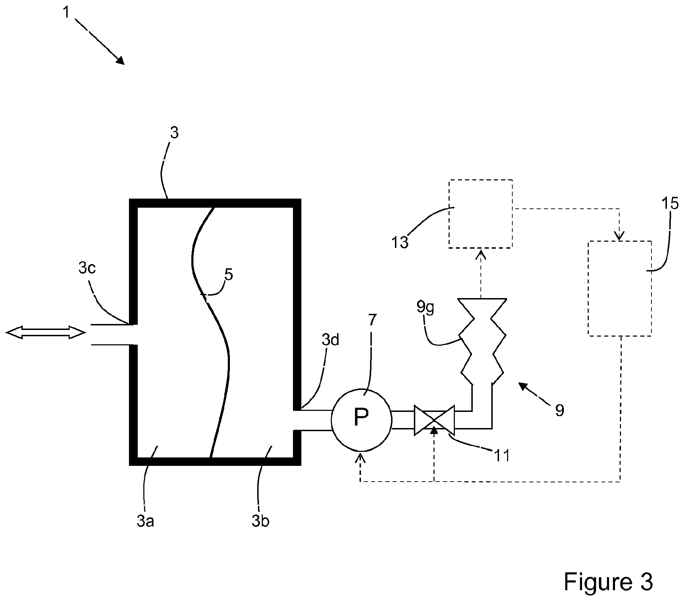

The embodiment of figure 3 differs from that of figure 1 in that an expandable bellows 9g, the expansion of which is measured mechanically, optically or by ultrasound on the basis of the displacement of its end face.

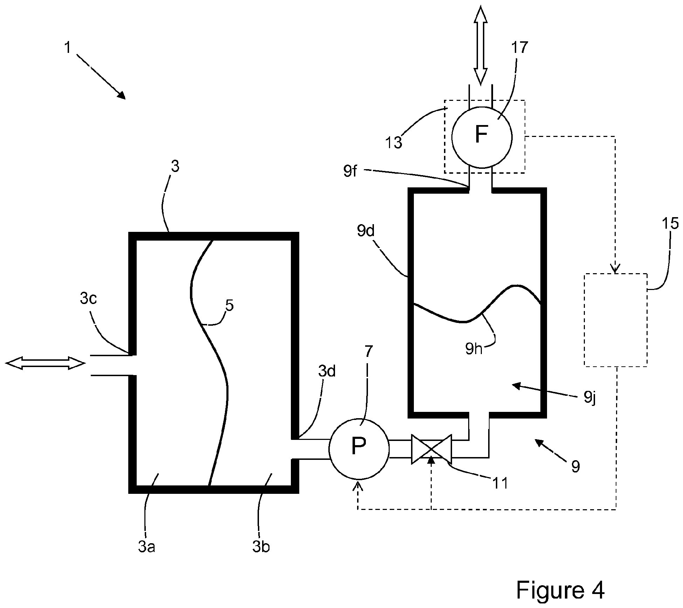

Finally, the embodiment of figure 4 differs from that of figure 2 in that the expansion chamber 9 comprises a membrane 9h similar to the membrane 5 of the dosing chamber, which functions in the same manner, and for which the same considerations apply. This membrane 9h delimits one side of an expandable enclosure 9j formed between the sidewalls of the chamber 9d and the membrane 9h. Displacement of the membrane 9h can alternatively be measured ultrasonically, magnetically (e.g. by fixing a magnet to the membrane 9h and measuring its displacement by means of a magnetic sensor such as a Hall probe), capacitively or optically rather than by use of the flow meter 17.

In all of the above embodiments, since the measurement of the volume of fluid aspirated or dispensed takes place remotely from said fluid, all risk of contamination by sliding seals or flow meters in contact therewith is removed, while retaining excellent measurement accuracy.

It should be noted that the system 1 of the invention is particularly suited for aspiring and dosing relatively small quantities of fluid, particularly under 10mL, more particularly under 1mL, and provides accuracy down to approximately 0.01µL. Typical flow rates can be as large as 2 mL/s, or as small as 1 µL per minute, depending on the dimensions of the system 1 and the type of pump 7 used. As a result, the system 1 is particularly suited to laboratory automation products for e.g. pipetting, titration or other applications such as flow cytometry, but it can also be applied in any liquid metering applications or microfluidics in general due to the fact that it can be constructed in a very compact manner.

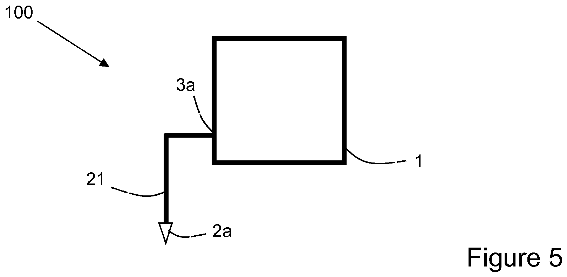

To this end, figure 5 illustrates schematically a pipetting system 100 comprising one or more fluid dosing systems 1 according to the invention, the first fluid port 3a of each being in fluidic communication with a conduit 21 leading to a pipetting tip 2, which likewise has a conduit passing through it axially, as is generally known. As mentioned above, the entire conduit 21 and dosing compartment 3a may be filled with the liquid to be pipetted, or they may be filled with air, the liquid to be pipetted only being aspirated a certain distance along the conduit 21 as is generally known.

Alternatively, the system 100 may be a flow cytometry system or a microfluidic chip. It is not necessary to illustrate these other possibilities explicitly, since the application of one or more fluid dosing system 1 therein is clear to the skilled person.

Although the invention has been described in terms of specific embodiments, variations thereto are possible without departing from the scope of the invention as defined in the appended claims.

## Claims

1. Fluid dosing system (1) comprising:
- a dosing chamber (3) divided in a fluid-tight manner by means of a displaceable membrane (5) into:
a) a dosing compartment (3a); and
b) a working fluid compartment (3b) filled with a working fluid having a bulk modulus of at least 1GPa;
- a first fluid port (3c) in fluidic communication with said dosing compartment (3a);
- a second fluid port (3d) in fluidic communication with said working fluid compartment (3b);
- an expansion reservoir (9) in fluidic communication with said fluid second port (3d) and filled with said working fluid;
- a bidirectional pump (7) in fluidic communication with said second port (3d) and said expansion reservoir (9) so as to be able to pump said working fluid bidirectionally between said working fluid compartment (3b) and said expansion reservoir (9);
- a flow sensor (13) arranged to measure flow of said working fluid based on displacement of at least part of said expansion reservoir (9).

2. Fluid dosing system (1) according to claim 1, wherein said expansion reservoir (9) comprises a cylinder (9b) in which a piston (9a) is slidingly mounted, said flow sensor being arranged to measure displacement of said piston (9a).

3. Fluid dosing system (1) according to claim 1, wherein said expansion reservoir (9) comprises an expandable bellows (9g).

4. Fluid dosing system (1) according to claim 1, wherein said expansion reservoir (9) comprises an expandable enclosure (9c; 9j); filled with said working fluid and situated in a gas filled chamber (9d), said gas filled chamber (9d) having a gas port (9f) situated therein, and said flow sensor (13) being arranged to measure flow of said gas through said gas port (9f).

5. Fluid dosing system (1) according to claim 4, wherein said expandable enclosure is a balloon (9c) or an expandable bellows or is at least partially delimited by a displaceable membrane (9h).

6. Fluid dosing system (1) according to any preceding claim, wherein said dosing compartment (3a) is filled with a gas

7. Fluid dosing system (1) according to one of claims 1-5, wherein said dosing compartment (3a) is filled with a liquid, preferably a liquid to be dispensed by the system.

8. Fluid dosing system (1) according to any preceding claim, wherein said pump (7) is a gear pump.

9. Fluid dosing system (1) according to one of claims 1-7, wherein said pump (7) is a viscous drag pump.

10. Fluid dosing system (1) according to the preceding claim, further comprising a controllable valve (11) situated between said expansion reservoir (9) and said working fluid compartment (3b).

11. Fluid dosing system (1) according to claim 10, wherein said valve (11) is arranged to be controlled by a controller (15) on the basis of an output of said flow sensor (13).

12. Fluid dosing system (1) according to any preceding claim, wherein said pump (7) is arranged to be controlled by a controller (15) on the basis of an output of said flow sensor (13).

13. Pipetting system (100) comprising at least one fluid dosing system (1) according to any preceding claim.

14. Flow cytometry system comprising at least one fluid dosing system (1) according to any of claims 1-12.

15. Microfluidic chip comprising at least one fluid dosing system (1) according to any of claims 1-12.
